# FASCICULE DE BREVET EUROPEEN

(11) **EP 3 073 085 B1**
(45) Date de publication et mention de la délivrance du brevet: **04.10.2017**
(21) Numéro de dépôt: 16156680.7
(22) Date de dépôt: 22.02.2016
(51) Int. Cl.: F01N 9/00, F01N 3/20, F02D 41/02, F02D 41/06, F02D 41/14

(54) **PROCÉDÉ DE TRAITEMENT DES GAZ D'ÉCHAPPEMENT ISSUS D'UN MOTEUR À COMBUSTION INTERNE**
VERFAHREN ZUR NACHBEHANDLUNG VON ABGASEN EINES VERBRENNUNGSMOTORS
METHOD FOR TREATING EXHAUST GASES FROM AN INTERNAL COMBUSTION ENGINE

(30) Priorité: 24.03.2015 FR 1552407
(43) Date de publication de la demande: 28.09.2016
(73) Titulaire: PSA Automobiles SA, 78300 Poissy (FR)
(72) Inventeur: BERNARD, Yoan, 78570 ANDRESY (FR); CLAVEL, Guillaume, 56230 Berric (FR); ZUMI, Michel, 92600 ASNIERE-SUR-SEINE (FR)

(56) Documents cités:
- WO-A1-2014/034947
- FR-A3- 2 959 277

## Description

L'invention a trait au domaine de la dépollution des gaz rejetés par les moteurs diesel.

Les gaz d'échappement des moteurs diesel contiennent des éléments polluants dont il est préférable de limiter les rejets dans l'atmosphère. Ces éléments polluants proviennent de la combustion du carburant diesel et comprennent des oxydes d'azote (couramment désignés sous l'acronyme NOx), du monoxyde de carbone (CO), du carburant imbrûlé ou encore des particules de suie.

Une fois la combustion terminée, les gaz d'échappement quittent le moteur et sont canalisés vers une ligne d'échappement, les gaz subissant plusieurs traitements par catalyse et filtration afin qu'en soient au moins partiellement extraits certains éléments nocifs.

L'élimination des NOx des gaz d'échappement peut être effectuée par différentes méthodes. L'une des méthodes consiste à renvoyer une partie des gaz d'échappement vers le moteur afin que ceux-ci soient brulés lors d'une seconde combustion, cette technique étant appelée EGR pour Exhaust Gas Recyclation. D'autres dispositifs piègent les NOx par adsorption, ces pièges étant connus sous l'acronyme anglais LNT pour Lean NOx Trap. Il existe également des systèmes plus élaborés comme la réduction catalytique sélective (SCR) qui consiste à injecter une solution réductrice des NOx, l'injection étant pilotée de manière dynamique.

Le traitement des NOx via le SCR consiste à déterminer une quantité réelle de NOx présents dans les gaz d'échappement ; déterminer une quantité de NOx à traiter en fonction d'une quantité limite de NOx prédéterminée à rejeter dans l'atmosphère ; déterminer un débit d'agent réducteur à injecter dans le SCR pour éliminer la quantité de NOx à traiter ; injecter le débit d'agent réducteur précédemment déterminé dans le SCR, à partir d'un réservoir.

Il est connu de modifier des paramètres de fonctionnement du moteur pour moduler la production de NOx. Toutefois, plus la production de NOx est faible, plus la consommation de carburant est élevée et inversement. Afin de respecter en toutes circonstances la législation en matière d'émission de NOx, les paramètres de fonctionnement du moteur basculent fréquemment entre un mode basse émission NOx et un mode basse consommation carburant. De tels fonctionnements ne sont pas efficaces dans certaines situations d'utilisation du véhicule, notamment lorsque le moteur est éteint puis redémarré fréquemment.

Le document FR 2 959 277 A3 propose un procédé selon le préambule de la revendication 1.

Un premier objectif est de proposer un procédé de traitement de gaz d'échappement permettant des économies substantielles de carburant, sans émettre plus de NOx.

Un deuxième objectif est de proposer un procédé qui soit simple et qui puisse être implémenté sur n'importe quel véhicule suffisamment équipé.

A cet effet, il est proposé, en premier lieu, un procédé de traitement des gaz d'échappement issus d'un moteur à combustion interne dans un véhicule automobile comprenant une ligne d'échappement munie d'un réducteur catalytique sélectif ci-après SCR et d'un réservoir comprenant un agent réducteur d'oxydes d'azote (NOx), ce procédé étant mis en oeuvre au moyen d'un programme informatique implémenté dans un calculateur et comprenant les étapes suivantes :
- déterminer une quantité réelle de NOx présents dans les gaz d'échappement,
- déterminer une quantité de NOx à traiter en fonction d'une quantité limite de NOx prédéterminée à rejeter dans l'atmosphère,
- déterminer un débit d'agent réducteur à injecter dans le SCR pour éliminer la quantité de NOx à traiter,
- injecter le débit d'agent réducteur précédemment déterminé dans le SCR, à partir du réservoir,
- modifier des paramètres de fonctionnement du moteur pour faire varier la production de NOx et la consommation de carburant respectivement ci-après mode basse émission NOx et mode basse consommation carburant, dans lequel le procédé comprend à chaque arrêt du moteur une étape consistant à enregistrer dans le calculateur, la date, l'heure et l'état du SCR, à savoir s'il fonctionne ou non, puis au démarrage suivant du moteur, si le SCR était avant l'arrêt du moteur en état de fonctionnement, le procédé comprend les étapes suivantes :
   - calculer la durée temporelle pendant laquelle le moteur est resté à l'arrêt,
   - mesurer la température extérieure au moyen d'un capteur de température,
   - calculer la cinétique de baisse de température du SCR à partir de la température extérieure,
   - calculer la température du SCR en fonction de la durée de l'arrêt et de la cinétique de baisse de la température,
- si la température calculée du SCR est inférieure à une température de fonctionnement du SCR, le calculateur envoie une information de sorte que le moteur soit au démarrage, en mode basse émission NOx,
- si la température du SCR est supérieure ou égale à une température de fonctionnement de celui-ci, le calculateur envoie une information de sorte que le moteur au démarrage soit directement en mode basse consommation carburant.

Le procédé ci-dessus permet de traiter efficacement les NOx contenus dans les gaz d'échappement, tout en permettant des économies substantielles de carburant.

Diverses caractéristiques supplémentaires peuvent être prévues, seules ou en combinaison :
- si à l'arrêt du moteur, le SCR n'est pas en état de fonctionnement, le calculateur envoie une information de sorte que le moteur au prochain démarrage soit directement en mode basse émission NOx ;
- l'agent réducteur est une solution d'urée.

Il est proposé, en deuxième lieu, un système de dépollution comprenant un réducteur catalytique sélectif ci-après SCR, monté sur une ligne d'échappement et un calculateur dans lequel est implémenté un programme informatique apte à opérer le procédé tel que précédemment décrit.

Il est proposé, en troisième lieu, un véhicule automobile comprenant un système de dépollution tel que précédemment décrit.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une représentation d'un véhicule automobile comprenant un système de traitement des gaz d'échappement issus d'un moteur à combustion interne,
- la figure 2 est une représentation schématique d'un système de dépollution d'un véhicule automobile,
- la figure 3 est un histogramme présentant différentes phases de fonctionnement d'un moteur et d'un système de dépollution,
- la figure 4 est un deuxième histogramme présentant différentes phases de fonctionnement d'un moteur et d'un système de dépollution.

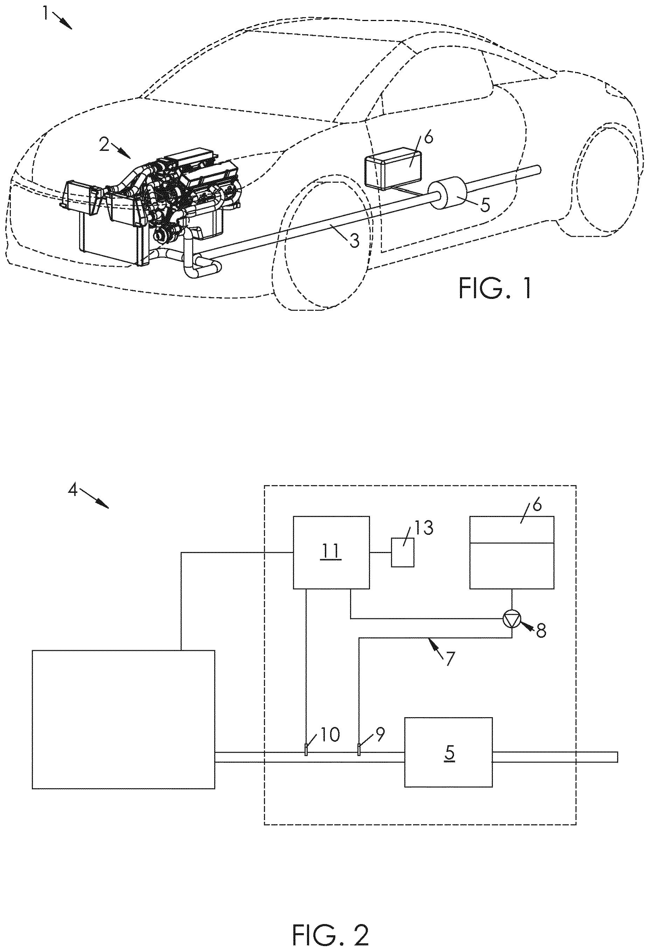

Il est représenté en figure 1, un véhicule **1** automobile comprenant un moteur **2** à combustion interne, une ligne **3** d'échappement et un système **4** de dépollution des gaz d'échappement issus du moteur **2.**

Les produits de la combustion contiennent, à la sortie du moteur **2,** des gaz contenant notamment des NOx. Les gaz d'échappement sont évacués du moteur **2** par la ligne **3** d'échappement sur laquelle est monté le système **4** de dépollution pour traiter les gaz d'échappement avant leur rejet dans l'atmosphère.

Le système **4** de dépollution, illustré de manière plus détaillée sur la figure 2, comprend :
- un réducteur catalytique sélectif ci-après dénommé SCR **5,**
- un réservoir **6** comprenant un agent réducteur, en l'espèce une solution d'urée ci-après dénommée urée,
- un circuit **7** d'injection d'urée,
- une pompe **8** d'injection,
- un injecteur **9,**
- une sonde **10** de mesure des NOx, et
- un calculateur **11.**

Un SCR **5** est un dispositif utilisé sur les véhicules diesel pour traiter les NOx présents dans les gaz d'échappement, grâce à une réduction des NOx par l'ammoniac, lequel est issu de l'urée portée à une température élevée dans le SCR **5,** ceci en présence d'oxygène, pour produire de l'azote et de l'eau.

Le calculateur **11** pilote l'injection d'urée depuis le réservoir **6** grâce à la pompe **8** d'injection et à l'injecteur **9.** Le calculateur **11** est muni d'un processeur (non représenté) et d'un support mémoire (non représenté) dans lequel est implémenté un programme informatique mettant en oeuvre un procédé de dépollution qui sera décrit ci-après.

La dépollution se fait via un procédé consistant tout d'abord à déterminer la quantité de NOx présente dans les gaz d'échappement. Cette opération de mesure est effectuée de manière continue à l'aide de la sonde **10** de mesure positionnée en aval du moteur **2.** Une autre technique de mesure consiste à charger une cartographie des émissions de NOx du moteur **2** dans le calculateur **11.** A chaque point de fonctionnement du moteur **2,** le calculateur **11** détermine la quantité de NOx émise en fonction de cette cartographie.

Le calculateur **11** détermine ensuite une quantité limite de NOx que le véhicule **1** est autorisé à rejeter dans l'atmosphère en fonction de plusieurs paramètres environnementaux.

Lorsque la quantité de NOx présente dans les gaz d'échappement est supérieure à la quantité limite rejetable dans l'atmosphère, la différence doit être éliminée. Le calculateur **11** détermine la quantité d'urée nécessaire pour traiter cette différence.

Une fois cette quantité d'urée déterminée, le calculateur **11** commande l'injection dans le SCR **5** via le circuit **7** d'injection et l'injecteur **9.**

Ces étapes sont reproduites sans cesse et de manière instantanée.

L'élimination des NOx dans le SCR **5** ne peut se faire que grâce à la réduction de ceux-ci par l'ammoniac. Toutefois, l'ammoniac ne peut être obtenu à partir de l'urée qu'en présence d'une certaine température. Ainsi, lorsque le SCR **5** est porté à une certaine température par les gaz d'échappement, l'ammoniac est libéré par l'urée au moment où elle est réchauffée dans le SCR **5.** Cette température sera ci-après dénommée température de fonctionnement.

La gestion du moteur **2** s'articule, de façon simplifiée, entre deux modes de fonctionnement, à savoir un mode dit « basse consommation de carburant » et un mode dit « basse émission NOx ».

En mode basse consommation de carburant, le moteur **2** génère d'importantes quantités de NOx en regard de ce qu'il génère lorsqu'il est en mode basse émission NOx. Toutefois, en mode basse émission NOx, le moteur **2** est plus énergivore et consomme donc plus de carburant.

Lors d'un démarrage du moteur **2** à froid, le SCR **5** n'a pas atteint la température de fonctionnement puisqu'il faut que s'écoule un certain temps de chauffe avant que le SCR **5** n'atteigne cette température.

Durant ce temps de chauffe, aucune injection d'urée dans le SCR **5** n'est effectuée. En effet, injecter de l'urée dans le SCR **5** alors que la température de fonctionnement n'est pas atteinte aurait pour conséquence que l'urée serait rejetée par la ligne **3** d'échappement dans l'atmosphère avec le flux des gaz d'échappement, sans qu'aucune élimination des NOx ne soit effectuée.

Durant le temps de chauffe, le moteur **2** fonctionne en mode basse émission de NOx afin de rester en dessous de la quantité limite de NOx.

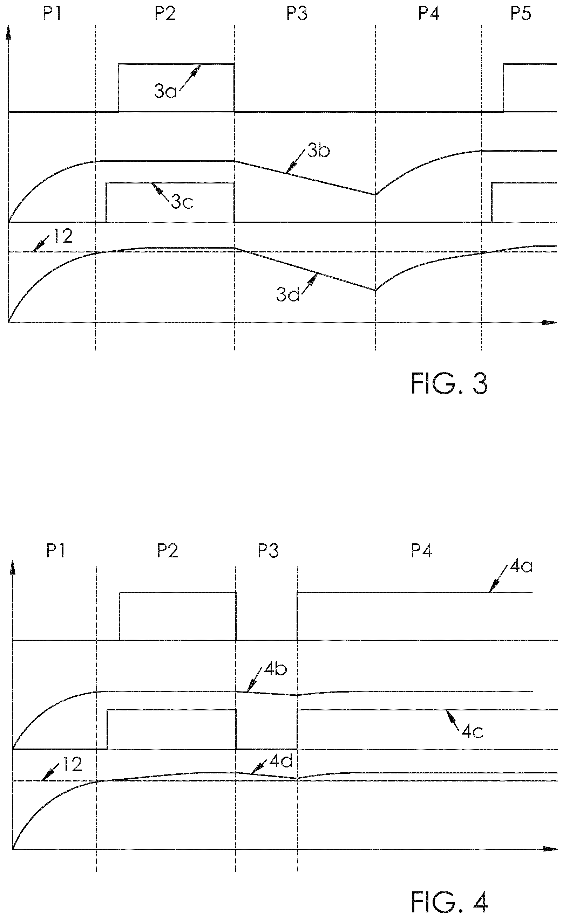

La figure 3 illustre les paramètres mis en jeux en ce qui concerne la dépollution des NOx par le SCR **5** et ce dans le cadre d'un arrêt long entre deux démarrages du moteur **2.** Un arrêt long présente une durée suffisamment longue d'un point de vue thermique, l'arrêt étant suffisamment long pour que la température du SCR **5** passe en dessous de sa température de fonctionnement. A l'inverse, un arrêt court ne permet pas au SCR **5** de descendre en dessous sa température de fonctionnement.

Les courbes **3a, 3b, 3c** et **3d** représentent respectivement l'état du réglage moteur, la température du liquide de refroidissement dans le moteur, l'efficacité du SCR **5,** et la température du SCR.

Dans une première phase **P1,** le moteur **2** est, après le démarrage, en mode basse émission NOx (courbe **3a),** les courbes **3b** et **3d** montrent que la température du SCR **5** et celle du liquide de refroidissement augmentent. Sur la courbe **3c,** on remarque que le SCR **5** ne fonctionne pas, la température de fonctionnement du SCR **5** matérialisée par la ligne **12** n'étant pas encore atteinte.

Dans une deuxième phase **P2,** les températures du SCR **5** et du liquide de refroidissement (respectivement courbes **3d** et **3b)** se stabilisent. Le SCR **5** devient efficace comme le montre la courbe **3c** et le réglage moteur passe en mode basse consommation carburant en référence à la courbe **3a,** quelques temps après que le SCR **5** soit devenu utilisable. La conséquence de ce réglage moteur est, comme précédemment expliqué, que le moteur **2** produit plus de NOx. Toutefois, le véhicule **1** ne rejette pas plus de NOx dans l'atmosphère puisque le SCR **5** fonctionne.

Dans une troisième phase **P3,** le moteur **2** a été arrêté pour une longue durée. La température du SCR **5** diminue ainsi que la température de l'eau du moteur **2.** L'arrêt est suffisamment long pour que la température du SCR **5** descende en dessous de sa température de fonctionnement.

Dans une quatrième phase **P4,** le moteur **2** est redémarré. Le réglage moteur par défaut est le réglage basse émission NOx, car le SCR **5** ne fonctionne pas à ce moment précis. Après un certain temps, le SCR **5** se met à nouveau à fonctionner dans une cinquième phase **P5** et le réglage moteur passe en mode basse consommation carburant quelque temps après.

Dans le cas qui vient d'être présenté où la durée entre deux arrêts consécutifs est suffisamment longue pour que la température du SCR **5** descende en dessous de sa température de fonctionnement, le moteur **2** est au démarrage toujours en mode basse émission NOx.

En référence à la figure 4, le temps d'arrêt entre deux démarrages consécutifs du moteur **2** est court. C'est-à-dire que l'arrêt ne permet pas à la température du SCR **5** de descendre en dessous de sa température de fonctionnement. De même que dans la figure 3, les courbes **4a, 4b, 4c** et **4d** représentent respectivement l'état du réglage moteur, la température du liquide de refroidissement dans le moteur, l'efficacité du SCR **5,** et la température du SCR.

Les phases **P1** et **P2** de la figure 4 sont identiques aux phases **P1** et **P2** de la figure 3. La différence entre ces deux figures 3 et 4 réside dans la phase **P3** de la figure 4 où l'arrêt est plus court que dans la phase **P3** de la figure 3. La température du SCR **5** en référence à la courbe **4d** n'a pas eu le temps de descendre en dessous de la température de fonctionnement matérialisée par la ligne **12.**

Ainsi, dans la phase **P4** où le moteur **2** est redémarré, le réglage moteur est directement positionné en mode basse consommation, puisque la température du SCR **5** lui permet de fonctionner normalement, sans risque que les rejets de NOx dans l'atmosphère soient au dessus de la quantité limite déterminée par le calculateur **11.**

A chaque arrêt du moteur **2,** le calculateur **11** enregistre la date et l'heure de l'arrêt du moteur **2** dans un espace mémoire alloué à cet effet. Au moment du démarrage, le calculateur **11** compare la date et l'heure du démarrage avec la date et l'heure du dernier arrêt du moteur **2.** Le calculateur **11** détermine ainsi la durée de l'arrêt. Un capteur **13** de température extérieure fournit au calculateur **11** la température extérieure. En fonction de ces deux données, le calculateur 11 détermine une cinétique de baisse de la température du SCR **5.**

Dans le cas où le calculateur **11** juge la température du SCR **5** insuffisante pour dépolluer, une information est envoyée par le calculateur **11** pour que le moteur **2** soit d'emblée en mode basse émission NOx. Dans le cas inverse où le calculateur **11** juge cette fois-ci la température du SCR **5** suffisante pour dépolluer, le moteur **2** démarre d'emblée en mode basse consommation carburant.

Un premier avantage de ce procédé est qu'il permet de faire des économies substantielles de carburant tout en ayant une dépollution efficace par le SCR **5.**

Un deuxième avantage est de permettre d'augmenter le rendement global du véhicule **1.**

## Revendications

1. Procédé de traitement des gaz d'échappement issus d'un moteur **(2)** à combustion interne dans un véhicule **(1)** automobile comprenant une ligne **(3)** d'échappement munie d'un réducteur catalytique sélectif ci-après SCR **(5)** et d'un réservoir **(6)** comprenant un agent réducteur d'oxydes d'azote (NOx), ce procédé étant mis en oeuvre au moyen d'un programme informatique implémenté dans un calculateur **(11)** et comprenant les étapes suivantes :
- déterminer une quantité réelle de NOx présents dans les gaz d'échappement,
- déterminer une quantité de NOx à traiter en fonction d'une quantité limite de NOx prédéterminée à rejeter dans l'atmosphère,
- déterminer un débit d'agent réducteur à injecter dans le SCR (5) pour éliminer la quantité de NOx à traiter,
- injecter le débit d'agent réducteur précédemment déterminé dans le SCR **(5),** à partir du réservoir **(6),**
- modifier des paramètres de fonctionnement du moteur **(2)** pour faire varier la production de NOx et la consommation de carburant respectivement ci-après mode basse émission NOx et mode basse consommation carburant, **caractérisé en ce que** le procédé comprend, à chaque arrêt du moteur **(2),** une étape consistant à enregistrer dans le calculateur **(11),** la date, l'heure et l'état du SCR **(5),** à savoir s'il fonctionne ou non, puis au démarrage suivant du moteur **(2),** si le SCR était avant l'arrêt du moteur **(2)** en état de fonctionnement, le procédé comprend les étapes suivantes :
- calculer la durée temporelle pendant laquelle le moteur **(2)** est resté à l'arrêt,
- mesurer la température extérieure au moyen d'un capteur **(13)** de température,
- calculer la cinétique de baisse de température du SCR **(5)** à partir de la température extérieure,
- calculer la température du SCR **(5)** en fonction de la durée de l'arrêt et de la cinétique de baisse de la température,
si la température calculée du SCR **(5)** est inférieure à une température de fonctionnement du SCR **(5),** le calculateur envoie une information de sorte que le moteur **(2)** soit au démarrage, en mode basse émission NOx, si la température du SCR **(5)** est supérieure ou égale à une température de fonctionnement de celui-ci, le calculateur envoie une information de sorte que le moteur **(2)** au démarrage soit directement en mode basse consommation carburant.

2. Procédé selon la revendication 1, **caractérisé en ce que** si à l'arrêt du moteur **(2),** le SCR **(5)** n'est pas en état de fonctionnement, le calculateur **(11)** envoie une information de sorte que le moteur **(2)** au prochain démarrage soit directement en mode basse émission NOx.

3. Procédé selon l'une quelconque des revendications précédentes, **caractérisé en ce que** l'agent réducteur est une solution d'urée.

4. Système **(4)** de dépollution comprenant un réducteur catalytique sélectif ci-après SCR **(5),** monté sur une ligne **(12)** d'échappement et un calculateur **(11)** dans lequel est implémenté un programme informatique apte à opérer le procédé selon l'une quelconque des revendications précédentes.

5. Véhicule (**1**) automobile comprenant un système **(4)** de dépollution selon la revendication 4.

## Patentansprüche

1. Verfahren zur Nachbehandlung von Abgasen, die aus einem Verbrennungsmotor (2) in einem Kraftfahrzeug (1) hervorgehen, das einen Abgasstrang (3) umfasst, der mit einem selektiven katalytischen Reduktor (5), unten SCR genannt, und einem Behälter (6), der ein Reduktionsmittel für Stickstoffoxide (NOx) umfasst, versehen ist, wobei das Verfahren mittels eines Informatikprogramms umgesetzt wird, das in einem Rechner (11) umgesetzt wird und die folgenden Schritte umfasst:
- Bestimmen einer realen Menge von NOx, die in den Abgasen enthalten ist,
- Bestimmen einer NOx-Menge, die in Abhängigkeit von einer vorbestimmten NOx-Grenzmenge, die in die Umgebung abzuleiten ist, zu behandeln ist,
- Bestimmen eines Reduktionsmitteldurchsatzes, der in den SCR (5) einzuspritzen ist, um die zu behandelnde NOx-Menge zu eliminieren,
- Einspritzen des zuvor bestimmten Reduktionsmitteldurchsatzes in den SCR (5) ausgehend von dem Behälter (6),
- Ändern der Betriebsparameter des Motors (2), um die NOx-Produktion und den Kraftstoffverbrauch, unten jeweils Modus mit niedriger NOx-Emissionen und Modus mit niedrigem Kraftstoffverbrauch genannt, variieren zu lassen, **dadurch gekennzeichnet, dass** das Verfahren bei jedem Stillstand des Motors (2) einen Schritt umfasst, der darin besteht, in dem Rechner (11) das Datum, die Uhrzeit und den Zustand des SCR (5) aufzuzeichnen, nämlich, ob er in Betrieb ist oder nicht, dann beim darauffolgenden Anlassen des Motors (2), falls der SCR vor dem Stillstehen des Motors (2) in Betrieb war, das Verfahren die folgenden Schritte umfasst:
- Berechnen der zeitlichen Dauer, während der der Motor (2) im Stillstand geblieben ist,
- Messen der Außentemperatur mittels eines Temperatursensors (13),
- Berechnen der Temperaturverringerungskinetik des SCR (5) ausgehend von der Außentemperatur,
- Berechnen der Temperatur des SCR (5) in Abhängigkeit von der Stillstandsdauer und der Temperaturverringerungskinetik,
falls die berechnete Temperatur des SCR (5) niedriger ist als eine Betriebstemperatur des SCR (5), der Rechner eine Information derart sendet, dass der Motor (2) beim Anlassen im Modus mit niedriger NOx-Emissionen ist, falls die Temperatur des SCR (5) größer oder gleich einer Betriebstemperatur dieses ist, der Rechner eine Information derart sendet, dass der Motor (2) beim Starten direkt im Modus mit niedrigem Kraftstoffverbrauch ist.

2. Verfahren nach Anspruch 1, **dadurch gekennzeichnet, dass**, falls beim Stillstand des Motors (2) der SCR (5) nicht in Betriebszustand ist, der Rechner (11) eine Information derart sendet, dass der Motor (2) beim darauffolgenden Starten direkt im Modus mit niedriger NOx-Emission ist.

3. Verfahren nach einem der vorhergehenden Ansprüche, **dadurch gekennzeichnet, dass** das Reduktionsmittel eine Harnstofflösung ist.

4. Reinigungssystem (4), das einen selektiven katalytischen Reduktor (5), unten SCR genannt, umfasst, der auf einen Abgasstrang (12) montiert ist, und einen Rechner (11), in dem ein Informatikprogramm umgesetzt wird, das geeignet ist, das Verfahren nach einem der vorhergehenden Ansprüche zu betreiben.

5. Kraftfahrzeug (1), das ein Reinigungssystem (4) nach Anspruch 4 umfasst.

## Claims

1. A method for treating exhaust gases from an internal combustion engine (2) in a motor vehicle (1), including an exhaust line (3) provided with a selective catalytic reducer, hereinafter SCR (5), and with a reservoir (6) including a reducing agent of nitrogen oxides (NOx), this method being implemented by means of a computer program executed in a computer (11) and including the following steps:
- determining an actual quantity of NOx present in the exhaust gases,
- determining a quantity of NOx to be treated as a function of a predetermined quantity limit of NOₓ to be discharged into the atmosphere,
- determining a flow of reducing agent to be injected in the SCR (5) to eliminate the quantity of NOx to be treated,
- injecting the flow of reducing agent previously determined in the SCR (5), from the reservoir (6),
- modifying operating parameters of the engine (2) to vary the production of NOₓ and the consumption of fuel, respectively hereinbelow low NOₓ emission mode and low fuel consumption mode, **characterized in that** the method includes, at each stoppage of the engine (2), a step consisting in recording in the computer (11) the date, the time and the status of the SCR (5), namely if it is operating or not, then on the following start-up of the engine (2), if the SCR was in the operating state before the stoppage of the engine (2), the method includes the following steps:
- calculating the time duration during which the engine (2) remains stopped,
- measuring the exterior temperature by means of a temperature sensor (13),
- calculating the temperature drop kinetics of the SCR (5) from the exterior temperature,
- calculating the temperature of the SCR (5) as a function of the duration of the stoppage and of the temperature drop kinetics,
if the calculated temperature of the SCR (5) is less than an operating temperature of the SCR (5), the computer sends data such that the engine (2) is starting up, in low NOx emission mode, if the temperature of the SCR (5) is greater than or equal to an operating temperature thereof, the computer sends data such that the engine (2) on start-up is directly in low fuel consumption mode.

2. The method according to Claim 1, **characterized in that** if at stoppage of the engine (2) the SCR (2) is not in operating state, the computer (11) sends data such that the engine (2) on the next start-up is directly in low NOx emission mode.

3. The method according to any one of the preceding clams, **characterized in that** the reducing agent is a urea solution.

4. A decontamination system (4) including a selective catalytic reducer, hereinafter SCR (5), mounted on an exhaust line (12), and a computer (11) in which a computer program is executed, suited to operate the method according to any one of the preceding claims.

5. A motor vehicle (1) including a decontamination system (4) according to Claim 4.
